# EUROPEAN PATENT APPLICATION

(11) **EP 4 557 240 A1**
(43) Date of publication of application: **21.05.2025**
(21) Application number: 23275163.6
(22) Date of filing: 16.11.2023
(51) Int. Cl.: G06V 20/52, F16P 3/14

(54) **IMAGE PROCESSING SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to an image processing system and an associated method. The method comprises receiving one or more images comprising image data relating to a user of a piece of equipment; processing the one or more images to determine whether a personal protective equipment (PPE) requirement is met, wherein determining whether the PPE requirement is met comprises processing the one or more images to determine whether the user is wearing PPE, and transmitting a signal to the piece of equipment to shut down at least part of the piece of equipment if the PPE requirement is not met.

## Description

### FIELD

The present invention relates to an image processing system and an associated method.

### BACKGROUND

Personal protective equipment (PPE) is a specific control measure in the use of plant, equipment and machinery to protect the operator. Examples of PPE include safety gloves, overalls and safety glasses. It is imperative that machine operators wear the appropriate PPE to prevent incident or injury. Lack of appropriate PPE is often the cause of industrial accidents or injuries.

Currently, it can be labour intensive to monitor and correct PPE compliance. Due to this, it is difficult to ensure that, on every occasion where PPE is a required control measure for operating plant, equipment or machinery, the operator is wearing the required PPE for the task.

There is a need for further developments in this area.

### SUMMARY

According to an aspect of the present invention, there is provided a computer implemented method comprising receiving one or more images comprising image data relating to a user of a piece of equipment; processing the one or more images to determine whether a personal protective equipment (PPE) requirement is met, wherein determining whether the PPE requirement is met comprises processing the one or more images to determine whether the user is wearing PPE; and transmitting a signal to the piece of equipment to shut down at least part of the piece of equipment if the PPE requirement is not met.

In some embodiments, the method further comprises identifying a PPE item that has been designated as required for using the piece of equipment, wherein processing the one or more images to determine whether the user is wearing PPE comprises determining whether the user is wearing the PPE item.

Determining whether the user is wearing the PPE item may comprise identifying a body part on which the PPE item is worn; drawing a bounding box around the corresponding body part of the user; and determining whether the PPE item is present within the bounding box.

Identifying a PPE item that has been designated as required for using the piece of equipment may comprise classifying the piece of equipment as belonging to an equipment category of a plurality of equipment categories; and identifying a PPE item associated with the equipment category.

In some embodiments, the one or more images comprise image data representing the user of the piece of equipment. The one or more images may be received in real-time.

In some embodiments, the method may additionally comprise receiving one or more further images comprising image data relating to the user of the piece of equipment; processing the one or more images to determine whether the personal protective equipment (PPE) requirement is met, and transmitting a signal to the piece of equipment to restart the at least part of the piece of equipment if the PPE requirement is met.

The method may also comprise transmitting a signal to the piece of equipment indicating that power should be maintained to the piece of equipment when the PPE requirement is met.

According to a second aspect of the present invention, there is provided data processing apparatus comprising means for carrying out the method of any preceding claim.

According to a third aspect of the present invention, there is provided a system comprising one or more cameras; a transmitter; a receiver, connected to the piece of equipment and configured to receive a signal from the transmitter; and data processing apparatus, wherein the data processing apparatus is configured to receive one or more images comprising image data relating to a user of a piece of equipment; process the one or more images to determine whether a personal protective equipment (PPE) requirement is met, wherein determining whether the PPE requirement is met comprises processing the one or more images to determine whether the user is wearing PPE; and transmit a signal to the piece of equipment to shut down at least part of the piece of equipment if the PPE requirement is not met.

In some embodiments the receiver is connected to a safety switch of the piece of equipment, and upon receipt of the signal, the safety switch is activated to shut down the at least part of the piece of equipment.

Shutting down at least part of the piece of equipment may comprise cutting power to the at least part of the piece of equipment.

The system may further comprise one or more sensors, wherein the data processing apparatus is configured to identify a PPE item that has been designated as required for using the piece of equipment based on data from the one or more sensors.

In some embodiments, the one or more cameras are configured to continuously monitor the piece of equipment. For example, the one or more cameras may be configured to observe one or more observation areas associated with the piece of equipment.

### BRIEF DESCRIPTION OF THE FIGURES

Embodiments of the invention will now be described by way of example only with reference to the figures, in which:
Figure 1 shows an image processing system for safety monitoring according to an example implementation;
Figure 2 shows a flowchart depicting a method according to an example implementation;
Figure 3a-3d illustrate an exemplary series of image processing steps according to an example implementation;
Figure 4a and 4b show an example use case of a system according to an example implementation;
Figure 5a and 5b show an example use case of a system according to another example implementation.

### DETAILED DESCRIPTION

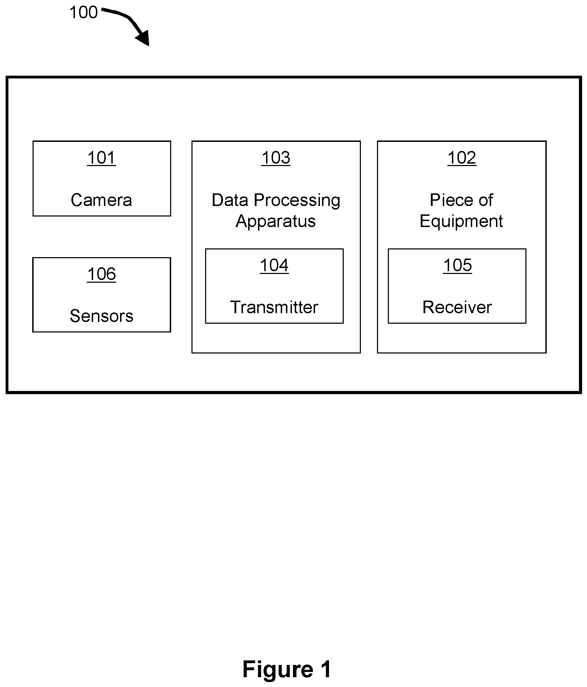

Figure 1 shows an image processing system 100 for safety monitoring according to an example embodiment of the present invention.

The system 100 comprises one or more cameras 101. The one or more cameras 101 are configured to obtain one or more images comprising image data relating to a user of a piece of equipment 102. The piece of equipment 102 may comprise a power tool, machinery, industrial/manufacturing equipment, or any other piece of equipment for which PPE is required to ensure the safety of the user.

The one or more cameras may be configured to observe one or more observation areas associated with the piece of equipment. The one or more observation areas may contain the piece of equipment 102 or a part of the piece of equipment 102, or be otherwise associated with the piece of equipment 102. The one or more cameras 101 may be configured to observe a wide view of the piece of equipment 102, such as observing the room the piece of equipment 102 is located in. Additionally or alternatively, the one or more cameras 101 may be configured to observe a particular area containing a part of the piece of equipment 102, such as in a close-up view of a part of the piece of equipment 102. In some embodiments, the one or more cameras 101 may be configured to observe a region to the side of the piece of equipment in which an operator is typically present, or an entrance of the room that the piece of equipment 102 is located in.

The one or more cameras 101 may comprise any suitable camera. The one or more cameras 101 may be configured to obtain a continuous stream of images i.e., a video. Alternatively, the one or more cameras 101 may be configured to obtain a series of still images, such as one image every 30 seconds, such as one image every 10 seconds, such as one image every 5 seconds, such as one image every 1 second.

The one or more cameras 101 may comprise a single camera trained on an observation area associated with the piece of equipment 102, or a network of two or more cameras each configured to monitor the same observation area from a different angle or zoom level, or to monitor different observation areas.

The one or more cameras 101 are in communication with data processing apparatus 103. This may be via a wired connection or a wireless connection. The data processing apparatus 103 is configured to receive one or more images from the one or more cameras 101. The one or more images may be received in real time.

The data processing apparatus 103 is configured to identify a personal protective equipment (PPE) item that has been designated as required for using the piece of equipment 102. The piece of equipment 102 may be classified as belonging to an equipment category of a plurality of equipment categories. Example equipment categories may include but are not limited to: a pillar drill; an industrial oven, or a waste disposal unit. In an embodiment, the data processing apparatus 103 may be pre-programmed with the relevant equipment category for the piece of equipment 102 being observed. In an embodiment, the one or more cameras may be arranged to capture images of the piece of equipment, and the data processing apparatus 103 may comprise a model trained to process the images and classify the piece of equipment 102 as belonging to a particular equipment category.

Identifying a PPE item that have been designated as required for using the piece of equipment 102 may comprise consulting a database to identify the required PPE items based on the equipment category. In an embodiment, the data processing apparatus 103 may be pre-programmed with the required PPE items for the piece of equipment 102 being observed.

In some embodiments, a single PPE item may be identified as required for using the piece of equipment 102. In some embodiments, more than one PPE item may be identified as required for using the piece of equipment 102.

The data processing apparatus 103 is further configured to process the one or more images to determine whether a personal protective equipment (PPE) requirement is met, wherein determining whether the PPE requirement is met comprises processing the one or more images to determine whether the user is wearing PPE. The image processing is described below. Upon determining that the PPE requirement is not met, the data processing apparatus 103 transmits a signal via a transmitter 104 to the piece of equipment 102 to shut down at least part of the piece of equipment 102. The signal may be transmitted via a wired connection, wireless connection, infrared, Bluetooth, or any other suitable means.

The system 100 further comprises a receiver 105 configured to receive the signal to shut down at least a part of the piece of equipment 102. For example, the receiver 105 may be connected to a safety switch of the piece of equipment 102. The receiver 105 may be in communication with the safety switch via a wired or wireless connection.

The safety switch may be located directly on the piece of equipment 102, and/or at a specific point which feeds a powered transmission to the piece of equipment 102. Upon receipt of the signal, the system 100 may be configured to activate the safety switch to shut down the part of the piece of equipment 102. In some embodiments, the safety switch may cut power to the entire piece of equipment. This ensures that the piece of equipment 102 cannot function unless all required PPE is being worn.

In some embodiments, the safety switch may only cut power to one part of the piece of equipment i.e., the part of the piece of equipment which poses a risk to the user and therefore necessitates the use of PPE. In this way, the user can continue to utilise other functions of the piece of equipment which do not require the missing PPE item. For example, if the piece of equipment is a pillar drill, the safety switch may cut power to the drill bit only. The user would be unable to operate the drill itself but could for example adjust settings on the pillar drill without wearing PPE.

In this way, the user is prevented from using the piece of equipment 102 when they are not wearing the appropriate PPE items. As such, the risk of injury to the user is significantly reduced. Furthermore, by actively stopping the user from proceeding without the appropriate PPE, the user learns to wear the appropriate PPE at all times whilst operating the equipment.

Subsequent to determining that the user is not wearing the required PPE items, the data processing apparatus 103 may continue to monitor the equipment 102 via the one or more cameras 101. Upon determining that the user has replaced the missing PPE item, the data processing apparatus 103 may transmit a signal via the transmitter 104 to restart the previously shut down equipment. Upon receipt of the signal, the system 100 may once again activate the safety switch to allow power to flow to the equipment 102, thus allowing the user to resume their work.

In an embodiment, the piece of equipment 102 may comprise a suite of (i.e., multiple) machines. In this embodiment, shutting down at least a part of the piece of equipment may comprise shutting down one or more of the machines in the suite of machines. For example, the piece of equipment 102 may comprise a series of conveyors, such as in a distribution or processing line. The system 100 may isolate a single conveyor to be shut down due to a user of that particular conveyor not wearing appropriate PPE, whilst maintaining power to the rest of the conveyors in the series. In this way, efficient workflow can still be maintained.

The system 100 may additionally comprise one or more sensors 106 in communication with the data processing apparatus 103. In an embodiment the data processing apparatus 103 may be configured to additionally receive data from the one or more sensors 106.

In an embodiment, the data processing apparatus 103 may identify a PPE item that has been designated as required for using the piece of equipment 102 based on the data from the one or more sensors 106. Upon determining that a user is not wearing the one or more additional PPE items, the data processing apparatus 103 may transmit a signal to the piece of equipment 102 to shut down at least part of the piece of equipment 102. For example, the sensors may comprise air quality sensors, and based on the output of these sensors the data processing apparatus 103 may determine that a face mask should be worn (alone or in addition to any PPE items already recognised as required for operating the piece of equipment 102). The data processing apparatus 103 may transmit a signal to shut down at least part of the piece of equipment 102 upon determining that a user is not wearing the required face mask.

In some embodiments, the system 100 may alert the user that the piece of equipment 102 has been shut down due to incorrect PPE being worn, for example via an alarm, flashing light, verbal warning/command, or any other suitable form of interaction.

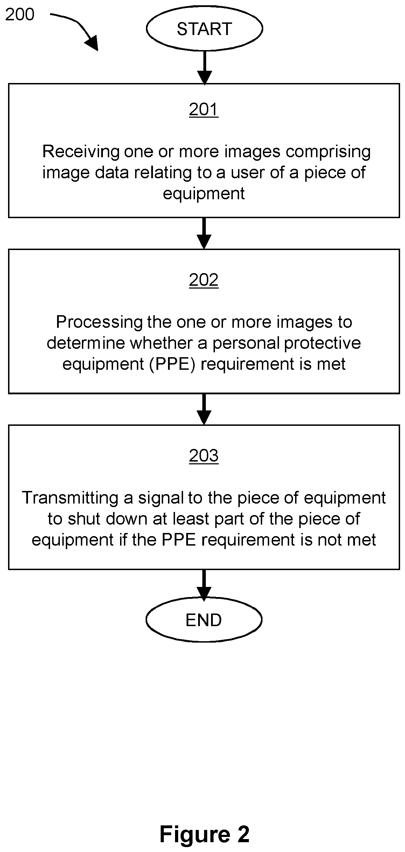

Figure 2 is a flowchart depicting a computer implemented method 200 according to the present invention. The method may be implemented by the data processing apparatus 103. At step 201 the method comprises receiving one or more images comprising image data relating to a user of a piece of equipment 102. For example, the one or more images may be obtained from one or more cameras 101. The one or more images may comprise image data representing the user of the piece of equipment 102, such as image data representing the whole or a part of the user. In some embodiments the image data may represent at least part of the piece of equipment 102 in addition to the user.

At step 202, the method comprises processing the one or more images to determine whether a personal protective equipment (PPE) requirement is met. Determining whether the PPE requirement is met comprises processing the one or more images to determine whether the user is wearing PPE. In an embodiment the PPE requirement is met when the user is wearing the required PPE items.

Methods for processing images to determine whether a PPE requirement is met are known per se in the art and will not be described in detail herein. One example of a suitable system which may be used in some embodiments is the commercially available Amazon Rekognition system, the developer guide for which is available at https://docs.aws.amazon.com/rekognition/latest/dg/ppe-detection.html.

This system takes an input image and returns a summary comprising: the persons detected in the image; the parts of a body where PPE is worn; the types of PPE detected on body parts; and for items of detected PPE, an indicator for whether or not the PPE covers the corresponding body part. Bounding boxes are returned for the locations of persons and items of PPE detected in the image. It will be understood that other known systems may alternatively or additionally be used. For example the article "Detection of Personal Protective Equipment (PPE) Compliance on Construction Site Using Computer Vision Based Deep Learning Techniques" in Frontiers in Built Environment, Volume 6 2020 (DOI=10.3389/fbuil.2020.00136) describes methods for determining the presence of safety jackets.

Thus, in an embodiment, processing the one or more images to determine whether the user is wearing the PPE item comprises identifying a body part on which the PPE item is worn, drawing a bounding box around the corresponding body part of the user, and determining whether the PPE item is present within the bounding box.

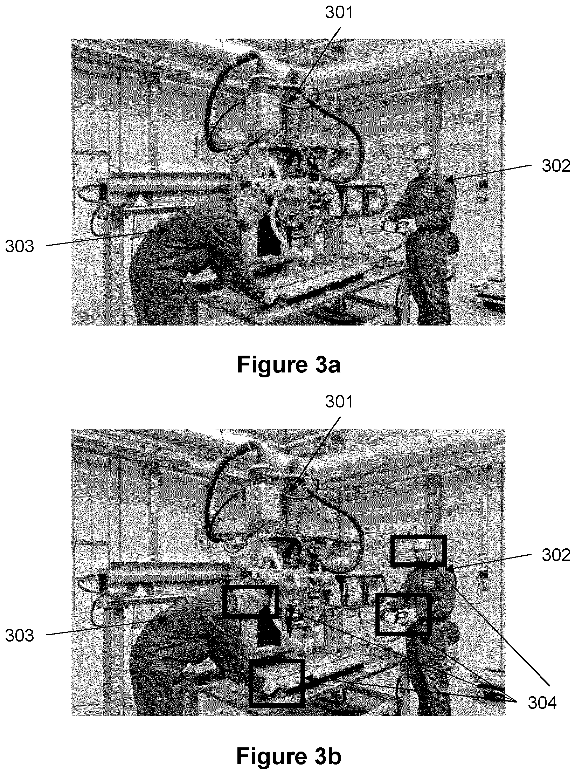

Figure 3a-3d show a series of images depicting a series of example image processing steps utilised by the system 100. Herein, image processing comprises processing the pixels of the image. Figure 3a is an example image obtained by the one or more cameras 101. The image shows an observation area associated with a piece of equipment 301 and two users 302 and 303 of the piece of equipment 301.

The data processing apparatus 103 identifies that in order to use the piece of equipment 301 safely, safety glasses are to be worn on the user's eyes, and gloves are to be worn on the user's hands. Figure 3b shows bounding boxes 304 drawn around the eyes and hands of the users 302 and 303, such as those which may be obtained using Amazon Rekognition. The data processing apparatus 103 then determines whether the required PPE items are present in the appropriate bounding box(es), again using a known system such as Amazon Rekognition.

Returning to Figure 2, at step 203, the method comprises transmitting a signal to the piece of equipment 102 to shut down at least part of the piece of equipment 102 if the PPE requirement is not met. The signal may be received by the receiver 105, and upon receipt of the signal the system 100 may activate a safety switch of the piece of equipment 102 to cut power to the piece of equipment 102.

In the example of Figure 3b, the data processing apparatus 103 identifies, based on the bounding boxes, that the users 302 and 303 are wearing the appropriate PPE and therefore the PPE requirement is met. The data processing apparatus 103 therefore detects that a safe state exists in which the piece of equipment 301 can be operated. The system 100 allows power to flow to the equipment 301 and the data processing apparatus 103 continues to monitor the equipment 301 via the one or more cameras 101.

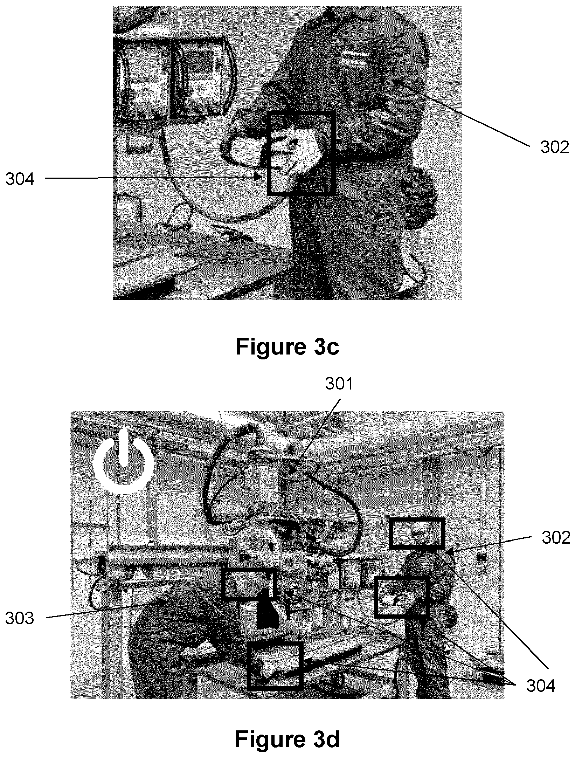

However, Figure 3c shows a subsequent image obtained by the one or more cameras (in a close-up view). The user 302 has removed a glove and hence is no longer wearing all required PPE items for the piece of equipment 301. The data processing apparatus 103 identifies that the required PPE item is not present within the bounding box 304, and therefore that the PPE requirement is not met. The data processing apparatus 103 therefore detects that an unsafe state exists.

Upon identifying that the user 302 is not wearing the required PPE, the data processing apparatus 103 transmits a signal to a receiver on the equipment 301 to shut down the equipment 301. The system 100 activates a safety switch to cut power to the equipment 301, as shown in Figure 3d. In this way, the user 302 is prevented from using the equipment 301 whilst not wearing the appropriate PPE, thus preventing injury to the user.

The method may additionally comprise receiving one or more further images comprising image data relating to the user of the piece of equipment 102; processing the one or more images to determine whether the personal protective equipment (PPE) requirement is met, and transmitting a signal to the piece of equipment 102 to restart the at least part of the piece of equipment 102 if the PPE requirement is met. In other words, upon determining that the user is wearing the one or more required PPE items, the method may comprise restarting the part of the piece of equipment 102 which was previously shut down. In this way, once the correct PPE items are worn correctly and the PPE requirement is met, the user can safely resume use of the piece of equipment 102.

In some embodiments, the data processing apparatus 103 transmits a signal via the transmitter 104 indicating that power should be maintained to the equipment 102 when the PPE requirement is met. For example, the one or more cameras may continuously monitor the piece of equipment 102, and the data processing apparatus 103 may transmit a regular signal indicating that power should be maintained, such as transmitting a signal every 60 seconds, such as transmitting a signal every 30 seconds, such as transmitting a signal every 10 seconds. In an embodiment, the data processing apparatus 103 receives a series of still images from the one or more cameras as described above, and transmits a signal upon receipt of each individual image.

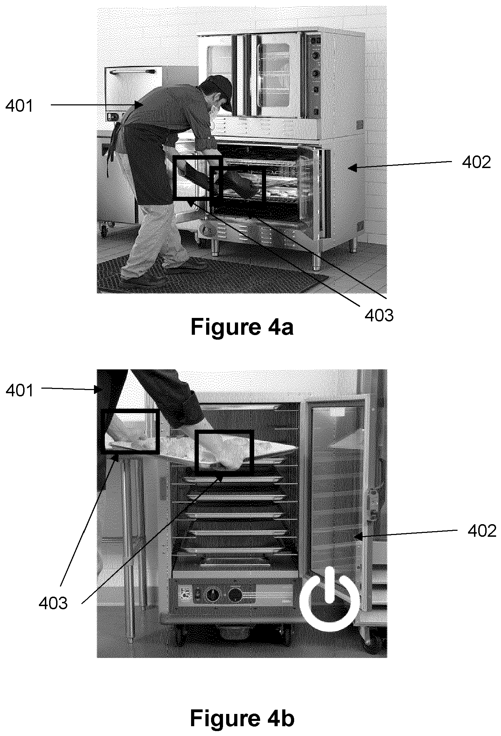

Figure 4a and 4b show an example use case of the system 100. Figure 4a depicts a user 401 operating an industrial oven 402. An industrial oven emits significant heat which could cause injury to the user without the appropriate PPE.

Using the process described above, the data processing apparatus 103 identifies that gloves are required for operating the industrial oven 402.

As shown in Figure 4a, a user 401 is in proximity to the industrial oven 402. The data processing apparatus 103 draws bounding boxes 403 around the user's hands as described above. The data processing apparatus 103 determines that the required PPE items are present within the bounding boxes 403, and thus that user 401 is wearing the appropriate PPE for the task. The system 100 therefore allows power to flow to the industrial oven 402.

In Figure 4b, by the same process, the data processing apparatus 103 determines that the required PPE items are not present within bounding boxes 403 drawn around the user's hands. The data processing apparatus 103 transmits a signal to shut down the industrial oven 402. Upon receipt of the signal, a safety switch cuts power to the industrial oven 402.

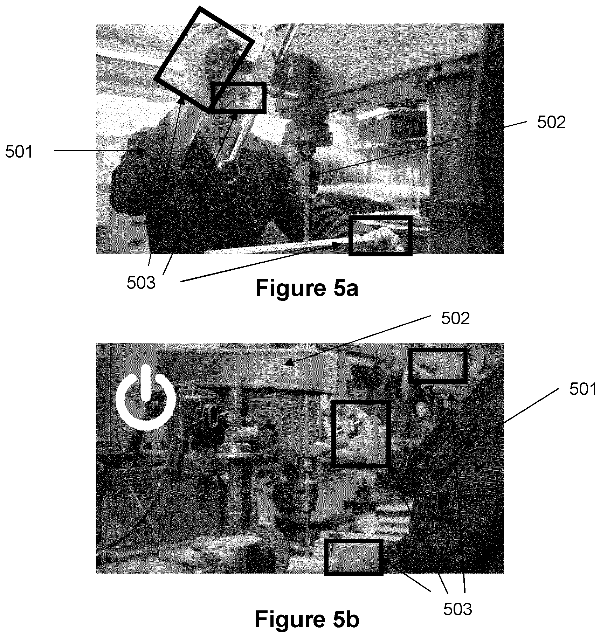

Figure 5a and 5b show a further example use case of the system 100. Figure 5a depicts a user 501 operating a pillar drill 502. Pillar drills are free standing machine tools used by engineers that use high powered motors to rotate drill bits at varying speed. These bits are then used to accurately machine, drill or tap holes in a variety of materials such as metal and wood. When operating a pillar drill, PPE (namely goggle and gloves) is crucial to protect the user's hands and eyes from debris which may be ejected from the drilling operation.

As shown in Figure 5a, a user 501 is in proximity to the pillar drill 502. Data processing apparatus 103 draws bounding boxes 503 around the user's hands and eyes and determines that the required PPE items are present within the bounding boxes 503, and thus that user 501 is wearing the appropriate PPE for the task. The system 100 therefore allows power to flow to the pillar drill 502.

In Figure 5b, by the same process, the data processing apparatus 103 determines that the required PPE items are not present within bounding boxes 503 drawn around the user's hands and eyes. The data processing apparatus 103 transmits a signal to shut down the pillar drill 502. Upon receipt of the signal, a safety switch cuts power to the pillar drill 502 and prevents the machinery from operating whilst the user is not wearing the appropriate PPE.

In a further example situation, the piece of equipment 102 may comprise a waste disposal unit. The waste disposal unit commonly generates significant amounts of dust, which can result in breathing difficulties and potentially long term health implications for a user who is not wearing an appropriate filtration mask. By the process described above, upon determining that a user is not wearing the required PPE, the data processing apparatus 103 may transmit a signal to shut down the waste disposal unit, thereby preventing further dust from being generated which could endanger the health of the user. For example, the system 100 may monitor the entrance to the room containing the waste disposal unit, and transmit a signal to shut down the waste disposal unit when a person enters the room without wearing the appropriate PPE.

The data processing apparatus 103 may be implemented in computer hardware, as digital electronic circuitry, integrated circuitry, specially designed ASICs (application specific integrated circuits) and/or combinations thereof. For example, the data processing apparatus may comprise any suitable computing system and may in some cases comprise a distributed system. The data processing apparatus may comprise one or more processors, and one or more memories storing computer-readable instructions, which when executed by the one or more processors, cause any of the computer-implemented methods as described herein to be performed. The one or more memories may comprise a working or volatile memory, as well as a nonvolatile memory for storing the computer-readable instructions.

Various modifications and variations will be apparent to those skilled in the art which fall within the scope of the following claims.

## Claims

1. A computer implemented method comprising:
receiving one or more images comprising image data relating to a user of a piece of equipment;
processing the one or more images to determine whether a personal protective equipment (PPE) requirement is met, wherein determining whether the PPE requirement is met comprises processing the one or more images to determine whether the user is wearing PPE; and
transmitting a signal to the piece of equipment to shut down at least part of the piece of equipment if the PPE requirement is not met.

2. The method of claim 1, further comprising identifying a PPE item that has been designated as required for using the piece of equipment, wherein processing the one or more images to determine whether the user is wearing PPE comprises determining whether the user is wearing the PPE item.

3. The method of claim 2, wherein determining whether the user is wearing the PPE item comprises:
identifying a body part on which the PPE item is worn;
drawing a bounding box around the corresponding body part of the user; and
determining whether the PPE item is present within the bounding box.

4. The method of any of claims 2 or 3, wherein identifying a PPE item that has been designated as required for using the piece of equipment comprises:
classifying the piece of equipment as belonging to an equipment category of a plurality of equipment categories; and
identifying a PPE item associated with the equipment category.

5. The method of any preceding claim, wherein the one or more images comprise image data representing the user of the piece of equipment.

6. The method of any preceding claim, further comprising:
receiving one or more further images comprising image data relating to the user of the piece of equipment;
processing the one or more images to determine whether the personal protective equipment (PPE) requirement is met, and
transmitting a signal to the piece of equipment to restart the at least part of the piece of equipment if the PPE requirement is met.

7. The method of any preceding claim, further comprising transmitting a signal to the piece of equipment indicating that power should be maintained to the piece of equipment when the PPE requirement is met.

8. The method of any preceding claim, wherein the one or more images are received in real-time.

9. Data processing apparatus comprising means for carrying out the method of any preceding claim.

10. A system comprising:
one or more cameras;
a transmitter;
a receiver, connected to the piece of equipment and configured to receive a signal from the transmitter; and
data processing apparatus configured to:
receive one or more images comprising image data relating to a user of a piece of equipment;
process the one or more images to determine whether a personal protective equipment (PPE) requirement is met, wherein determining whether the PPE requirement is met comprises processing the one or more images to determine whether the user is wearing PPE; and
transmit a signal to the piece of equipment to shut down at least part of the piece of equipment if the PPE requirement is not met.

11. The system of claim 10, wherein the receiver is connected to a safety switch of the piece of equipment, and wherein upon receipt of the signal, the safety switch is activated to shut down the at least part of the piece of equipment.

12. The system of claim 11, wherein shutting down at least part of the piece of equipment comprises cutting power to the at least part of the piece of equipment.

13. The system of any of claims 10-12, further comprising one or more sensors, wherein the data processing apparatus is configured to identify a PPE item that has been designated as required for using the piece of equipment based on data from the one or more sensors.

14. The system of any of claims 10-13, wherein the one or more cameras are configured to continuously monitor the piece of equipment.

15. The system of any of claims 10-14, wherein the one or more cameras are configured to observe one or more observation areas associated with the piece of equipment.
